# EUROPEAN PATENT APPLICATION

(11) **EP 4 573 994 A1**
(43) Date of publication of application: **25.06.2025**
(21) Application number: 23219823.4
(22) Date of filing: 22.12.2023
(51) Int. Cl.: A47J 43/046, A47J 43/07

(54) **HOUSEHOLD DEVICE, IN PARTICULAR A HOUSEHOLD BLENDER**

(71) Applicant: BSH Hausgeräte GmbH, 81739 München (DE)
(72) Inventor: Enci, David, 3331 Nazarje (SI); Pecnik, Gregor, 3330 Mozirje (SI)

(57) **Abstract**

The present invention relates to a household device (1) which has a base (4) with a base housing (5) and a jar (7) arranged to receive a product to be processed. The base (4) and the jar (7) can be detachably connected by means of a bayonet locking connection (8) by relative rotation of the base (4) and the jar (7) about a centre axis (9) of the household device (1). Furthermore, it is provided that the base (4) has a connecting plate (10) which has a first bayonet locking device (11) of the bayonet locking connection (8). The jar (7) has a second bayonet locking device (14) of the bayonet locking connection (8), which can be releasably connected to the first bayonet locking device (11), and a processing tool (15), which can be releasably connected by drive to an output shaft (13) of a drive (6), for processing a product held in the jar (7). It is essential for the invention that the connecting plate (10) of the base (4) is floatingly arranged on the base housing (5) of the base (4) via a decoupling element (16).

## Description

The present invention relates to a household device, in particular a household blender, according to the subject matter of claim 1.

The above-mentioned household device can be used to process, in particular blend, mix, chop and/or stir material, primarily a food product, which is held in a jar of the household device. A major disadvantage is that during operation of the household device, i.e. when the household device is processing the food being held, it is primarily the jar that is set in vibration. The vibration of the jar can be transmitted to neighbouring components of the household device, causing the household device to vibrate, which causes unpleasant noise for a user when the household device is in operation.

The object of the invention is therefore to provide an improved or at least an alternative embodiment for a household device compared to these disadvantages.

In the present invention, this object is achieved by the object of the independent claim. Advantageous embodiments are subject of the dependent claims, the description and the drawings.

The invention has recognised that disturbing noises on the household device can be prevented or at least significantly reduced if the jar of the household device is floatingly mounted on a base of the household device.

For this purpose, the invention proposes a household device, in particular a household blender, which has a base which can be placed on a surface (of a worktop) and has a base housing in which a drive is accommodated, and a jar which is designed to accommodate a product to be processed, in particular a product to be blended, mixed, chopped or stirred. The base and the jar are designed to be detachably connectable by means of a bayonet locking connection of the household device by a relative rotation of the base and the jar about a centre axis of the household device. The base has a connection plate which has a first bayonet locking device of the bayonet locking connection and a through opening. The drive has an output shaft which is conveniently aligned parallel to the centre axis and which is arranged at least in sections in the through opening of the connection plate. Furthermore, the jar has a second bayonet locking device of the bayonet locking connection, which can be detachably connected to the first bayonet locking device, as well as a processing tool, which can be detachably connected to the output shaft of the drive with regard to drive, for processing a product held in the jar. It is essential that the connecting plate of the base is arranged, in particular exclusively, on the base housing of the base via a decoupling element.

As a result the connecting plate and the jar are vibration-decoupled from the base housing during normal operation of the household device. In other words, the connecting plate and the jar are floatingly mounted on the base housing. This has the effect that vibrations of the jar which are caused during intended operation of the household device, in particular by processing of the food held in the jar by means of the processing tool, are damped and practically not transmitted to the base housing via the connecting plate. This has the advantage that the base housing and other components of the household device attached to it are not excited to vibrate. Furthermore, it was recognised that the vibrations occurring at the jar and/or the connection plate during operation of the household device are damped. As a result a significant reduction in background noise is realised during the intended operation of the household device which leads to an improvement of a user comfort.

In particular, the household device can be designed as a household blender. The household blender is used, for example, for blending vegetables and/or for making fruit or vegetable puree and smoothies at home.

It may be useful for the decoupling element to have elastic material properties. This allows the vibrations coming from the jar to be optimally damped (insulated).

In a preferred embodiment of the invention, it is provided that the decoupling element is made of a rubber material, in particular a nitrile rubber. With such a rubber decoupling element or NBR decoupling element, an advantageous vibration decoupling can be achieved. Furthermore, rubber materials or nitrile rubber materials can be provided at low cost.

In particular, it may be provided that the base housing has a carrier plate with a recess, whereby the decoupling element and the connection plate are inserted into the recess of the carrier plate in such a way that the decoupling element is arranged between the connection plate and the support plate in a transverse direction, in particular perpendicular to the centre axis. For intended operation of the household device, the carrier plate can be arranged vertically and/or directly adjacent to the jar in the direction of the centre axis of the household device. Furthermore, the carrier plate can extend essentially horizontally and/or at right angles to the centre axis of the household device. It may also be provided that the carrier plate is integrally connected to an outer peripheral casing of the base housing. The outer peripheral casing can preferably form an outer skin of the household device that is visible from the outside.

The connecting plate may have an annular shape and for the decoupling element to be configured as a decoupling ring. The aforementioned recess in the carrier plate is preferably circular in shape. It may be provided that the decoupling ring is configured as a full ring or partial ring.

The decoupling element may have a L-shaped cross-section. In this case, a horizontal section of the base in contact with the decoupling ring can be arranged on a first, horizontal leg of the L-shaped decoupling ring. Furthermore, the connecting plate can have an annular decoupling ring receptacle for receiving the decoupling ring. The decoupling ring receptacle of the connecting plate can have a first, horizontal receiving surface and an adjoining second, vertical receiving surface, whereby the L-shaped decoupling ring rests with a first, horizontal leg of the L-shaped decoupling ring against the first receiving surface of the decoupling ring receptacle and a second, vertical leg of the L-shaped decoupling ring rests against the second receiving surface of the decoupling ring receptacle.

The terms "horizontal" and "vertical" used herein refer to the intended use of the household device. During the intended operation of the household device, the household device is conveniently placed on a surface (worktop), with the centre axis perpendicular to the surface and/or forming a vertical line.

The output shaft can be aligned in parallelly, in particular coaxially, with respect to the centre axis of the household device.

It may also be useful for the drive to have an electric motor with a rotor shaft and a motor support plate with a plate opening, whereby a cylinder collar runs around the plate opening. The electric motor is conveniently fixed to the motor support plate. Furthermore, the rotor shaft can be configured or connected to the output shaft with regard to drive and arranged at least in sections in the plate opening. The output shaft can be arranged at least in sections in the plate opening. Furthermore, the cylinder collar can be tightly supported on an inner circumference of the through opening of the connecting plate via a sealing element, in particular an O-ring, accommodated on an outer circumference of the cylinder collar. This provides a preferred embodiment for the proposed household device, in which an interior space of the base, delimited by the base housing, is sealed off from the surroundings. In other words, the central through-opening of the connection plate is sealed. The sealing element used has elastic properties so that vibrations can also be damped by means of the sealing element. This has the effect that vibrations coming from the jar cannot propagate into the electric motor and/or the motor support plate during normal operation of the household device, and vice versa.

The output shaft can have a driver gear wheel and a cap element accommodating the driver gear wheel, wherein the driver gear wheel can be detachably connected to a mating driver gear wheel of the processing tool in a driving manner and the cap element has a rotor shaft fixing receptacle in which a rotor shaft of an electric motor of the drive can be fixed.

Furthermore, it may be provided that the processing tool is designed as a cutting device which has a tool shaft, a counter driver gear wheel which is non-rotatably connected to the tool shaft, is arranged outside the jar and can be detachably connected to a driver gear wheel of the output shaft of the drive with regard to drive, and a blender blade which is non-rotatably connected to the tool shaft, is arranged inside the jar and can be rotationally adjusted about the centre axis.

Thus, a preferred embodiment of the household device is a household blender in which a material held in the jar, in particular a material to be blended, mixed, chopped or stirred, can be blended, mixed, chopped or stirred.

To summarise: The present invention preferably relates to a household device having a base with a base housing and a jar adapted to receive a material to be processed. The base and the jar are detachably connectable by means of a bayonet locking connection by relative rotation of the base and the jar about a centre axis of the household device. It is further provided that the base has a connection plate which has a first bayonet locking device of the bayonet locking connection. The jar has a second bayonet locking device of the bayonet locking connection which can be detachably connected to the first bayonet locking device and a processing tool which can be detachably connected to a drive shaft of a drive with regard to drive, for processing a material held in the jar. It is essential for the invention that the connecting plate of the base is floatingly arranged on the base housing of the base via a decoupling element.

Further important features and advantages of the invention are apparent from the dependent claims from the drawings and from the description of the figures with reference to the drawings.

It is understood that the above-mentioned features and those to be explained below can be used not only in the combination indicated in each case, but also in other combinations or on their own, without departing from the scope of the present invention.

Preferred embodiments of the invention are shown in the drawings and are explained in more detail in the following description, with identical reference signs referring to identical or similar or functionally identical components.

It shows, schematically in each case
- Fig. 1: a perspective view of a preferred embodiment of a household device according to the invention, and
- Fig. 2: a longitudinal centre section view of the household device of Fig. 1, showing a section of the household device enlarged.

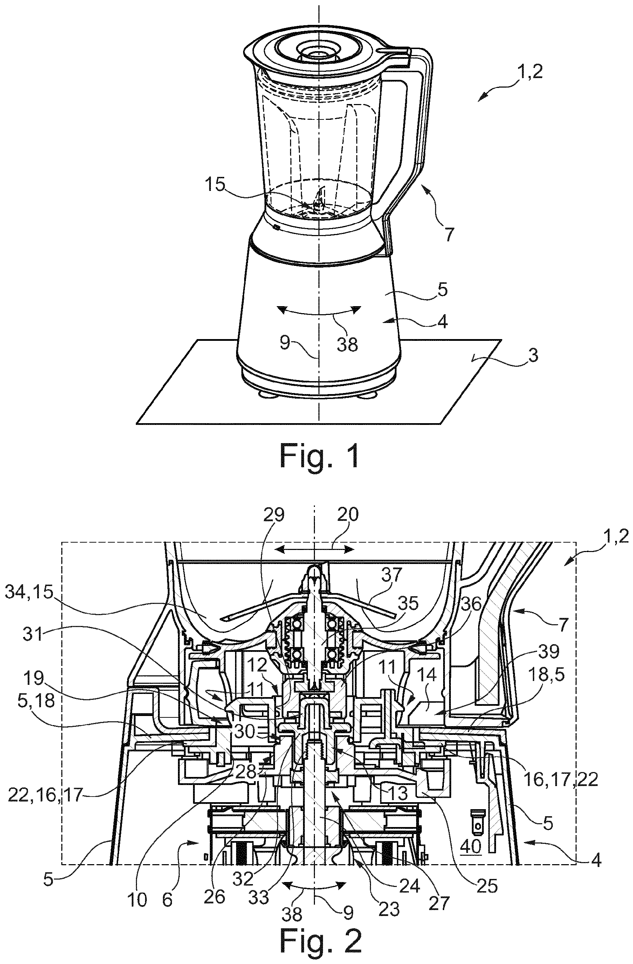

Figs. 1 and 2 showing a household device, denoted as a whole with the reference number 1 and configured as a household blender 2, which is used, for example, for blending vegetables and/or for making fruit or vegetable puree and smoothies at home.

Fig. 1 depicts the household blender 2 with a base 4 having a base housing 5 that can be placed on a flat surface 3, preferably on a worktop, whereby a drive 6, shown in Fig. 2, is accommodated in the base housing 5. The household blender 2 also has a jar denoted with reference sign 7, the jar opening of which can be closed with a lid. The jar 7 is configured to hold a material to be processed, in particular a material to be blended, mixed or stirred, and has a processing tool 15 provided for processing a material held in the jar 7. For the jar 7 to be conveniently handled, the base 4 and the jar 7 are configured to be detachably connectable by means of a bayonet locking connection 8 by a relative rotation 38 of the base 4 and the jar 7 about a centre axis 9, which is represented by a dotted line in Figs. 1 and 2.

In order to prevent or at least reduce unpleasant noise during the intended operation of the household blender 2, the jar 7 is designed to float on the base 4.

For this purpose, the base 4 has an annular connecting plate 10 on an upper side 39 facing away from the surface 3 which is arranged opposite the jar 7 during the intended operation of the household mixer 2. The connecting plate 10 has a first bayonet locking device 11 of the bayonet locking connection 8 and a through opening 12, in which an output shaft 13 of the drive 6, which is coaxially aligned with respect to the centre axis 9, is arranged. Furthermore, the jar 7 has a second bayonet locking device 14 of the bayonet locking connection 8 which can be detachably connected to the first bayonet locking device 11. To ensure that the jar 7 is decoupled from the base housing 5 with regard to vibrations, the connecting plate 10 is arranged on the base housing 5 of the base 4 exclusively via a decoupling element 16 which is configured as a decoupling ring 17 in the present case. The decoupling element 16 is made of a rubber material, in particular a nitrile rubber, and has elastic material properties and an L-shaped cross-section 22.

Fig. 2 also shows that the base housing 5 has a substantially flat support plate 18 with a circular recess 19 on its upper side. The decoupling element 16 and the connecting plate 10 are inserted into the recess 19 of the carrier plate 18 in such a way that the decoupling element 16 is arranged between the connecting plate 10 and the carrier plate 18 in a transverse direction 20 oriented perpendicularly to the centre axis 9. As a result, the connecting plate 10 and the jar 7 are floatingly mounted on the base housing 5, so that a significant reduction in noise is realised during the intended operation of the household device 1.

With regard to Fig. 2, it should also be explained that the output shaft 13 of the drive 6 comprises several components. It has a driver gear wheel 31 and a cap element 32 that accommodates the driver gear wheel 31, whereby the driver gear wheel 31 can be detachably connected to a mating driver gear wheel 36 of the processing tool 15 of the jar 7 with regard to drive. The cap element 32 has a rotor shaft fixing mount 33, for example an internal thread, in which a rotor shaft 24 of an electric motor 23 of the drive 6 is fixed.

Fig. 2 also shows that the electric motor 23 with the rotor shaft 24 is enclosed in the base housing 5 and the drive 6 has a motor support plate 25 with a plate opening 27 framed by a cylinder collar 26. The electric motor 23 is fixed to the motor support plate 25 and the rotor shaft 24 is drive-connected to the output shaft 13 and arranged at least in sections in the plate opening 27.

For an interior 40 of the base 4, which is delimited by the base housing 5, to be sealed off from the surroundings and, furthermore, an appropriate vibration decoupling of the jar 7 and the base 4 to be achieved, it is provided that the cylindrical collar 26 is tightly supported on an inner circumference 29 of the through-opening 12 via a sealing element 30, in particular an O-ring, which is accommodated on an outer circumference 28 of the cylindrical collar 26.

It should also be mentioned that the processing tool 15 comprises several components and is configured as a cutting device 34. The cutting device 34 has a tool shaft 35, a mating driving gear wheel 36 which is non-rotatably connected to the tool shaft 35 and arranged outside the jar 7 and which is detachably connected to the driving gear wheel 31 of the output shaft 13 of the drive 6 with regard to drive during the intended operation of the household device 1. The cutting device 34 also has a blender blade 37 which is non-rotatably connected to the tool shaft 35 and arranged inside the jar 7 and which is rotatable about the centre axis 9.

### List of reference signs

1. Household device
2. Household blender
3. Surface (worktop)
4. Base
5. Base housing
6. Drive
7. Jar
8. Bayonet locking connection
9. Centre axis
10. Connecting plate
11. First bayonet locking device
12. Through opening of the connecting plate
13. Output shaft
14. Second bayonet locking device
15. Processing tool
16. Decoupling element
17. Decoupling ring
18. Carrier plate
19. Circular recess
20. Transverse direction
22. Cross-section of the decoupling element
23. Electric motor
24. Rotor shaft
25. Motor support plate
26. Collar
27. Plate opening
28. Outer circumference
29. Inner circumference
30. Sealing element
31. Drive gear wheel
32. Cap element
33. Rotor shaft fixing mount
34. Cutting device
35. Tool shaft
36. Mating driver gear wheel
37. Blender blade
38. Rotation
39. Upper side
40. Interior

## Claims

1. Household device (1), in particular a household blender (2),
- with a base (4) that can be placed on a surface (3) with a base housing (5) in which a drive (6) is accommodated,
- with a jar (7) designed to hold a material to be processed,
- wherein the base (4) and the jar (7) can be detachably connected by means of a bayonet locking connection (8) by relative rotation (38) of the base (4) and the jar (7) about a centre axis (9) of the household device (1),
- wherein the base (4) has a connecting plate (10) which has a first bayonet locking device (11) of the bayonet locking connection (8) and a through opening (12),
- wherein the drive (6) has an output shaft (13) which is arranged at least in sections in the through opening (12) of the connecting plate (10),
- wherein the jar (7) has a second bayonet locking device (14) of the bayonet locking connection (8), which can be releasably connected to the first bayonet locking device (11), and a processing tool (15), which can be releasably connected to the output shaft (13) of the drive (6) with regard to drive, for processing a material held in the jar (7),
- wherein the connecting plate (10) is arranged, in particular exclusively, on the base housing (5) via a decoupling element (16).

2. Household device (1) according to claim 1,
**characterised in that**
- the decoupling element (16) has elastic material properties.

3. Household device (1) according to claim 1 or 2,
**characterised in that**
- the decoupling element (16) is made of a rubber material, in particular a nitrile rubber.

4. Household device (1) according to one of the preceding claims,
**characterised in that**
- the base housing (5) has a carrier plate (18) with a recess (19), wherein the decoupling element (16) and the connecting plate (10) are inserted into the recess (19) of the carrier plate (18) in such a way that the decoupling element (16) is arranged between the connecting plate (10) and the carrier plate (18) in a transverse direction (20) oriented transversely to the centre axis (9).

5. Household device (1) according to one of the preceding claims,
**characterised in that**
- the connecting plate (10) is ring-shaped, and/or
- the decoupling element (16) is designed as a decoupling ring (17).

6. Household device (1) according to claim 5,
**characterised in that**
- the decoupling ring (17) is designed as a full ring or as a partial ring.

7. Household device (1) according to one of the preceding claims,
**characterised in that**
- the decoupling element (16) has an L-shaped cross-section (22).

8. Household device (1) according to one of the preceding claims,
**characterised in that**
- the output shaft (13) is aligned parallelly, in particular coaxially, with respect to the centre axis (9) of the household device (1).

9. Household device (1) according to one of the preceding claims,
**characterised in that**
- the drive (6) comprising an electric motor (23) with a rotor shaft (24) and a motor support plate (25) with a plate opening (27) framed by a cylindrical collar (26),
- the electric motor (23) is fixed to the motor support plate (25),
- the rotor shaft (24) can be connected or is connected to the output shaft (13) with regard to drive and is arranged at least in sections in the plate opening (27),
- the output shaft (13) is arranged at least in sections in the plate opening (27),
- the cylindrical collar (26) is tightly supported on an inner circumference (29) of the through opening (12) of the connecting plate (10) via a sealing element (30), in particular an O-ring, accommodated on the outer circumference (28) of the cylindrical collar (26).

10. Household device (1) according to one of the preceding claims,
**characterised in that**
- the output shaft (13) comprising a driver gearwheel (31) and a cap element (32) receiving the driver gear wheel (31), wherein the driver gear wheel (31) can be releasably connected to a mating driver gear wheel (36) of the processing tool (15) in a driving manner and the cap element (32) has a rotor shaft fixing receptacle (33), in which a rotor shaft (24) of an electric motor (23) of the drive (6) can be fixed, and/or
- the processing tool (15) is designed as a cutting device (34), which preferably has a tool shaft (35), a mating driver gear wheel (36), which is non-rotatably connected to the tool shaft (35) and is arranged outside the jar (7) which can be detachably connected to a driving gear wheel (31) of the output shaft (13) of the drive (6), and a blender blade (37) which is non-rotatably connected to the tool shaft (35), is arranged inside the jar (7) and is rotatable about the centre axis (9).
